# EUROPEAN PATENT SPECIFICATION

(11) **EP 2 482 575 B1**
(45) Date of publication and mention of the grant of the patent: **02.01.2019**
(21) Application number: 11290053.5
(22) Date of filing: 28.01.2011
(51) Int. Cl.: H04W 12/06, H04L 29/06, H04W 64/00, H04W 4/02, H04L 29/08

(54) **Authenticating and localizing a mobile user**
Authentifizierung und Lokalisierung eines mobilen Nutzers
Authentification et localisations d'un utilisateur mobile

(43) Date of publication of application: 01.08.2012
(73) Proprietor: Alcatel Lucent, 91620 Nozay (FR)
(72) Inventor: van Bemmel, Jeroen, 2513 EV The Hague (NL)
(74) Representative: Browne, Robin Forsythe

(56) References cited:
- EP-A1- 1 282 044
- EP-A1- 2 106 099
- WO-A2-2007/072474

## Description

### FIELD OF THE INVENTION

The present invention relates to a method and apparatus for authenticating and localizing a mobile user.

### BACKGROUND

Websites often incorporate a login system based on a user ID and password to provide security and to authenticate the user. The user ID may be, for example, a user name, e-mail address, mobile phone number, arbitrary number, and the like, this not being an exhaustive list. Users are urged to provide unique, strong passwords for each different site but this advice is often ignored. It can be difficult for a user to remember many user names and passwords, one for each site they frequent.

There may also be a problem in authenticating a user's identity. For many websites, anyone can register for an account and there is no link to a person's real identity.

Several approaches have been proposed to reduce these problems. For example, the "Single Sign-On" concept enables users to provide credentials once to get access to several web sites. The Liberty Alliance group is concerned with managing user identity across different web services. 2-factor authentication is sometimes used, for example, using a physical token or a smartcard in addition to a password so both the possession of a physical object and password is required but such mechanisms can often only be applied on a limited scale since distribution of tokens or smartcards to users is costly.

The published patent application EP 1 282 044 A1 discloses a certification method. According to this method, a portable terminal transmits a query code to a certification server via a reader and a sales management server to be certified.

### BRIEF SUMMARY

The present invention provides a method according to claim 1, and an apparatus according to claim 16.

According to a first aspect of the invention, in a method for authenticating and localizing a mobile user, an authentication server receives from a mobile user an authentication request and an identifier associated with a trusted entity, the location of the trusted entity being ascertainable by the server. The server produces a code associated with the mobile user in response to the authentication request and sends the code to the trusted entity for the trusted entity to provide the code to the mobile user. The server receives an audio signal from the mobile user and compares the audio signal received from the mobile user with the code. The server authenticates the mobile user when the audio signal comprises the code and localizes the mobile user based on the location of the trusted entity.

In one embodiment, the mobile user may communicate with the server via a mobile telephone handset. The server may receive details of the mobile user profile from the mobile telephone handset, for example, it may receive the subscriber details from a SIM included in the mobile handset. This provides a link between an actual person and the authenticated identity. The subscriber details may be only the telephone number of the mobile telephone handset, for example, but in some embodiments the subscriber details may be more extensive, including one or more of the following: the mobile user's name, postal address, subscription account number or other details included in a subscriber profile.

The mobile user may require a PIN to unlock his mobile phone and this provides 2-factor security, requiring possession of the handset and knowledge of the PIN necessary to operate it. However, in one embodiment, the possession of the mobile phone handset is sufficient to authenticate the mobile user to a certain extent.

The location of the trusted entity can provide information regarding the location of the mobile user by ensuring that the mobile user must be in the vicinity of the trusted entity. In one embodiment, the trusted entity plays the code as audio. This audio can be recorded by the mobile user for transmission to the server, thus confirming that the mobile user is in the vicinity of the trusted entity, or the mobile user may be in an ongoing call with the server and hold the mobile handset to the trusted entity for the server to pick up the audio as it is played. The latter option demonstrates that the mobile user is indeed at the same location as the trusted entity. However, the former may give better quality audio. A timer may be applied by the server so that, after a given time duration, the code recorded by the mobile user is no
longer valid, thus preventing the user from travelling a distance away from the location of the trusted user before sending the audio signal to the server.

In an embodiment, the audio code sent by the server includes a timestamp encoded in the signal. This allows the server to verify that it recently sent the signal and protects against so-called "replay attacks", where an attacker records the audio signal and play it back at a later point in time.

In emerging markets, a user may have only a basic, low cost mobile telephone with limited additional features, but by employing a method in accordance with the invention, the user is able to authenticate their identity. This can be useful for accessing web services, for example, banking services or other situations where security is important. For example, it can be used in making micro payments with low per-transaction overhead costs.

Only basic skills are required from the mobile user to make use of the authentication mechanism. It can be used to enable secure authentication even for illiterate users or new users with little education and no experience in using a mobile phone.

In one embodiment, the trusted entity may be, for example, a mobile handset belonging to a trusted person. In another embodiment, it may be some other mobile terminal, such as a netbook or laptop.

In another embodiment, the trusted entity is a terminal having a website screen shown on a display. The terminal could be at a fixed location, for example, in an Internet cafe or at a general store, or it could be installed in a vehicle, for example. A web terminal may be ruggedized and arranged so that, until user authorization is completed, only a small cheap LCD display is exposed. After authentication, other functions become unlocked to allow access to a monitor and keyboard. If damage or theft occurs, it may be traced to the authenticated user, thus discouraging such actions.

In an embodiment, the server localizes the mobile user using location information received from the trusted user. The location information may be sent by the trusted entity directly to the server or via the mobile user, in which latter case it is included in the audio signal received by the server from the user. The location information may be provided by a GPS system included in the trusted entity.

In another embodiment, the location of the trusted entity is determined from knowledge of the cell of a cellular telecommunications network. For example, the trusted entity may be a mobile telephone handset or another device able to communicate via the cellular network.

According to a second aspect of the invention, apparatus for authenticating and localizing a mobile user is programmed or configured to perform a method in accordance with the first aspect of the invention.

In one embodiment, apparatus comprises: an authentication server having a receiver for receiving from a mobile user an authentication request and an identifier associated with a trusted entity; a code producer for the server to provide a code associated with the mobile user in response to the authentication request; a transmitter for the server to send the code to the trusted entity for the trusted entity to provide the code to the mobile user; and a comparator for the server to compare an audio signal received from the mobile user with the code to authenticate the mobile user when the audio signal comprises the code.

According to a third aspect of the invention, a trusted entity is adapted to be used a method in accordance with the first aspect of the invention and comprises a receiver for receiving a code from the authentication server; a processor for providing the received code as an audio signal and a loudspeaker for playing the received code as audio for capture by the mobile user.

### BRIEF DESCRIPTION OF THE DRAWINGS

Some embodiments of the present invention will now be described by way of example only, and with reference to the accompanying drawings, in which:
Figure 1 schematically illustrates one embodiment; and
Figure 2 schematically illustrates another embodiment.

### DETAILED DESCRIPTION

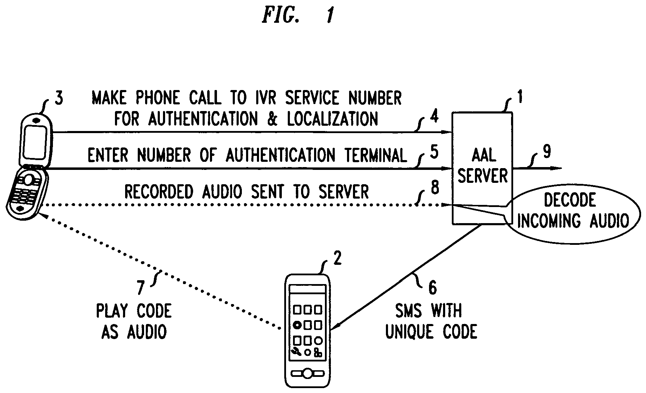

With reference to Figure 1, a user wants to access a bank account and must first be authenticated at an authentication server 1 so that his identity and location may be verified. The user travels to an authentication terminal that acts as a trusted entity 2 in the authentication process. In this case, the authentication terminal is a mobile phone handset which is registered and issued to an authorized person.

The user is a mobile subscriber and has a low cost mobile telephone handset 3. The user makes a call, shown at 4 in Figure 1, to the authentication server 1 via the server's interactive voice recognition service. The server 1 requests the user to enter a registration number of the trusted entity 2 and this is done at step 5. The registration number may be the telephone number of the trusted entity or some other number issued for authentication process purposes.

The server 1 then generates an identification code that is unique to the user and transmits the code, at step 6, to the trusted entity 2 as an SMS message. The code may include an encrypted timestamp. The trusted entity 2 includes a global positioning system (GPS) which gives its location. The trusted entity 2 may relay its GPS positional information directly back to the server 1 for the server to associate the location with the identification code issued in connection with the user. However, in this embodiment, the location information is sent to the server 1 via the user's mobile handset 3.

The trusted entity 2 includes an application which receives the SMS message. and processes the received message. At step 7, the loudspeaker included in the trusted entity plays audio which is encoded with the received unique authentication code. In this embodiment, the audio signal is also encoded with the GPS position of trusted entity 2.

The user records the audio signal with the mobile handset 3 as it is played by the trusted entity 2. The user then sends the recorded audio signal to the server 1, as shown at step 8.

The server 1 receives the audio signal. If it is received within a given time from when the server transmitted the code to the trusted entity, the server 1 decodes the audio signal to retrieve the code and compares it with the code sent by the server 1 to the trusted entity 2. If there is a match, the identity of the user is authenticated. The server also determines the location of the mobile user. Providing these are satisfactory, the server authorizes to access the bank website at 9.

The audio signal derived from the trusted terminal may be encrypted and/or signed such that only the server is able to decode it, and/or it provides verification that it originates from this specific trusted terminal.

The solution uses low-cost commonly available mobile handsets for authentication and localization of mobile subscribers. The mobile device acts as a "secure token" to prove the identity and location of its user and doe not require 'high end' features. The mobile device is able to make phone calls, for example, having a microphone and a speaker, means for dialing a number, and may include a SIM card for securely storing the subscriber identity and its subscription data.

In an embodiment similar to that shown in Figure 1, the trusted entity consists only of a speaker device with one-way audio. An application installed on the trusted entity receives an SMS message, or another compatible format, with the code.

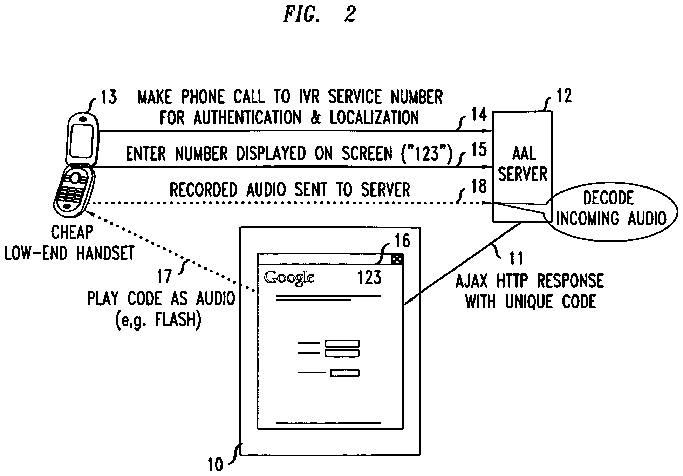

With reference to Figure 2, user authentication and localization for logging into a web site via a computer 10 is provided by an arrangement similar to that shown in Figure 1. In this case the computer, for example a laptop, uses a data connection 11 with the authentication server 12 to register and receive a unique code. The unique code may be refreshed periodically.

The mobile user calls the authentication server with his mobile phone 13 at step 14, as in the embodiment of Figure 1, and, at step 15, enters the number 16 provided by a display screen of the computer 10, this being the identification for the computer 10. In another embodiment, the registration number display may be a simple character-based LCD display.

The user holds the mobile phone 13 to the speaker of a security terminal, which is the trusted entity in this case, and captures the audio played by the trusted entity at step 17. The trusted entity may be included in the computer 10 or separate therefrom. The user then sends the audio signal to the server 12 at step 18 and is duly authenticated if the audio signal includes the correct code. The user is then logged into the website.

The server 12 may send the code by an Ajax HTTP response, by streaming audio over IP or some other suitable mechanism.

The security terminal may have more advanced capabilities, such as an inbuilt GPS system, but this is not essential, as step 11 could also be carried out using an audio call to the trusted terminal. The terminal could also consist of only a speaker device with one-way audio. The signal could be encrypted/signed such that only the authentication server could decode it, and could verify that it originates from this specific terminal.

The functions of the various elements shown in the figure, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method for authenticating and localizing a mobile user including:
an authentication server receiving from a mobile user an authentication request and an identifier associated with a trusted entity, the location of the trusted entity being ascertainable by the server;
the server producing a code associated with the mobile user in response to the authentication request;
the server sending the code to the trusted entity for the trusted entity to provide the code to the mobile user;
the server receiving an audio signal from the mobile user; and
the server comparing the audio signal received from the mobile user with the code and authenticating the mobile user when the audio signal comprises the code and localizing the mobile user based on the location of the trusted entity.

2. The method as claimed in claim 1 wherein the server localizes the mobile user using location information received from the trusted entity.

3. The method as claimed in claim 2 wherein the server receives the location information from the trusted entity via the mobile user.

4. The method as claimed in claim 3 wherein the audio signal comprises the location information.

5. The method as claimed in any preceding claim wherein the location of the trusted entity is obtained from a global positioning system included in the trusted entity.

6. The method as claimed in any preceding claim and including determining the location of the trusted entity by ascertaining the cell of a cellular telecommunications network in which the trusted entity is located.

7. The method as claimed in any preceding claim and including the server sending the code to the trusted entity in an SMS (short message service) message.

8. The method as claimed in any preceding claim and including the server sending the code to the trusted entity as an instruction to display the code on a website page.

9. The method as claimed in any preceding claim wherein the mobile user communicates with the server via a mobile telephone handset.

10. The method as claimed in any preceding claim wherein the server receives mobile subscriber details from the mobile user and uses the subscriber details in authenticating the mobile user.

11. The method as claimed in any preceding claim wherein the trusted entity is a mobile phone handset.

12. The method as claimed in any preceding claim wherein the trusted entity is a web terminal.

13. The method as claimed in any preceding claim wherein the trusted entity plays the code received from the server as audio.

14. The method as claimed in any preceding claim wherein the server authorizes connection of the mobile user to a service when the identity of the mobile user is authenticated.

15. The method as claimed in any preceding claim and including the server determining if the audio signal is received within a given time for authentication.

16. Apparatus for authenticating and localizing a mobile user and programmed or configured to perform a method as claimed in any preceding claim.

## Patentansprüche

1. Verfahren zur Authentifizierung und Lokalisierung eines Benutzers eines Mobilfunkgeräts, das Folgendes umfasst:
einen Authentifizierungsserver, der von einem Benutzer eines Mobilfunkgeräts eine Authentifizierungsanforderung und eine Kennzeichnung empfängt, die einer vertrauenswürdigen Entität (Trusted Entity) zugeordnet ist, wobei die Position der vertrauenswürdigen Entität vom Server bestätigbar ist;
wobei der Server einen Code erzeugt, der dem Benutzer des Mobilfunkgeräts in Reaktion auf die Authentifizierungsanforderung zugeordnet wird;
wobei der Server den Code an die vertrauenswürdige Entität sendet, damit die vertrauenswürdige Entität den Code dem Benutzer des Mobilfunkgeräts zur Verfügung stellt;
wobei der Server ein Audiosignal von dem Benutzer des Mobilfunkgeräts empfängt; und
wobei der Server das Audiosignal, das von dem Benutzer des Mobilfunkgeräts empfangen worden ist, mit dem Code vergleicht und den Benutzer des Mobilfunkgeräts authentifiziert, wenn das Audiosignal den Code aufweist und den Benutzer des Mobilfunkgeräts basierend auf der Position der vertrauenswürdigen Entität lokalisiert.

2. Verfahren nach Anspruch 1,
wobei der Server den Benutzer des Mobilfunkgeräts unter Verwendung der von der vertrauenswürdigen Entität empfangenden Positionsinformation lokalisiert.

3. Verfahren nach Anspruch 2,
wobei der Server die Positionsinformation von der vertrauenswürdigen Entität über den Benutzer des Mobilfunkgeräts empfängt.

4. Verfahren nach Anspruch 3,
wobei das Audiosignal die Positionsinformation aufweist.

5. Verfahren nach einem der vorhergehenden Ansprüche,
wobei die Position der vertrauenswürdigen Entität von einem globalen Positionierungssystem erhalten wird, das in der vertrauenswürdigen Entität enthalten ist.

6. Verfahren nach einem der vorhergehenden Ansprüche,
welches das Bestimmen der Position der vertrauenswürdigen Entität umfasst, indem die Zelle eines zellularen Telekommunikationsnetzwerks bestätigt wird, in der sich die vertrauenswürdige Entität befindet.

7. Verfahren nach einem der vorhergehenden Ansprüche,
welches den Server aufweist, der den Code an die vertrauenswürdige Entität in einer SMS-Nachricht (Short Message Service, Kurznachrichtendienst-Nachricht) sendet.

8. Verfahren nach einem der vorhergehenden Ansprüche,
welches den Server aufweist, der den Code an die vertrauenswürdige Entität als eine Anweisung sendet, den Code auf einer Website-Seite anzuzeigen.

9. Verfahren nach einem der vorhergehenden Ansprüche,
wobei der Benutzer des Mobilfunkgeräts mit dem Server über ein Mobiltelefon-Handset kommuniziert.

10. Verfahren nach einem der vorhergehenden Ansprüche,
wobei der Server Detailinformationen zu dem Abonnenten des Mobilfunkgeräts von dem Benutzer empfängt und die Detailinformationen des Abonnenten zur Authentifizierung des Benutzers des Mobilfunkgeräts verwendet.

11. Verfahren nach einem der vorhergehenden Ansprüche,
wobei die vertrauenswürdige Entität ein Mobiltelefon-Handset ist.

12. Verfahren nach einem der vorhergehenden Ansprüche,
wobei die vertrauenswürdige Entität ein Web-Terminal ist.

13. Verfahren nach einem der vorhergehenden Ansprüche,
wobei die vertrauenswürdige Entität den vom Server empfangenen Code als Audiodaten wiedergibt.

14. Verfahren nach einem der vorhergehenden Ansprüche,
wobei der Server die Verbindung des Benutzers des Mobilfunkgeräts mit einem Service autorisiert, wenn die Identität des Benutzers des Mobilfunkgeräts authentifiziert ist.

15. Verfahren nach einem der vorhergehenden Ansprüche,
welches den Server aufweist, der bestimmt, ob das Audiosignal zur Authentifizierung innerhalb einer bestimmten Zeitspanne empfangen wird.

16. Vorrichtung zum Authentifizieren und Lokalisieren eines Benutzers eines Mobilfunkgeräts,'
welches dazu programmiert oder ausgelegt ist, ein Verfahren nach einem der vorhergehenden Ansprüche durchzuführen.

## Revendications

1. Procédé d'authentification et de localisation d'un utilisateur mobile comportant :
un serveur d'authentification recevant, en provenance d'un utilisateur mobile, une requête d'authentification et un identifiant associé à une entité de confiance, la localisation de l'entité de confiance étant déterminable par le serveur ;
le serveur produisant un code associé à l'utilisateur mobile en réponse à la requête d'authentification ;
le serveur envoyant le code à l'entité de confiance afin que l'entité de confiance fournisse le code à l'utilisateur mobile ;
le serveur recevant un signal audio en provenance de l'utilisateur mobile ; et
le serveur comparant le signal audio reçu de l'utilisateur mobile avec le code et authentifiant l'utilisateur mobile lorsque le signal audio comprend le code et la localisation de l'utilisateur mobile sur la base de la localisation de l'entité de confiance.

2. Procédé selon la revendication 1, selon lequel le serveur localise l'utilisateur mobile en utilisation des informations de localisation reçues de l'entité de confiance.

3. Procédé selon la revendication 2, selon lequel le serveur reçoit les informations de localisation de l'entité de confiance via l'utilisateur mobile.

4. Procédé selon la revendication 3, selon lequel le signal audio comprend les informations de localisation.

5. Procédé selon l'une quelconque des revendications précédentes, selon lequel la localisation de l'entité de confiance est obtenue par le biais d'un système de positionnement global inclus dans l'entité de confiance.

6. Procédé selon l'une quelconque des revendications précédentes, comportant la détermination de la localisation de l'entité de confiance par le biais de la détermination de la cellule d'un réseau de télécommunication cellulaire dans lequel se situe l'entité de confiance.

7. Procédé selon l'une quelconque des revendications précédentes, comportant l'envoi par le serveur du code à l'entité de confiance par un message SMS (service de messagerie courte).

8. Procédé selon l'une quelconque des revendications précédentes, comportant l'envoi par le serveur du code à l'entité de confiance sous forme d'instruction d'affichage du code sur une page d'un site web.

9. Procédé selon l'une quelconque des revendications précédentes, selon lequel l'utilisateur mobile communique avec le serveur via un téléphone mobile.

10. Procédé selon l'une quelconque des revendications précédentes, selon lequel le serveur reçoit les données d'abonné mobile en provenance de l'utilisateur mobile et utilise les données d'abonné dans l'authentification de l'utilisateur.

11. Procédé selon l'une quelconque des revendications précédentes, selon lequel l'entité de confiance est un téléphone portable.

12. Procédé selon l'une quelconque des revendications précédentes, selon lequel l'entité de confiance est un terminal web.

13. Procédé selon l'une quelconque des revendications précédentes, selon lequel l'entité de confiance fait jouer le code reçu du serveur en tant qu'audio.

14. Procédé selon l'une quelconque des revendications précédentes, selon lequel le serveur autorise la connexion de l'utilisateur mobile à un service lorsque l'identité d'un utilisateur mobile est authentifiée.

15. Procédé selon l'une quelconque des revendications précédentes, comportant la détermination par le serveur de la réception du signal audio dans un laps de temps donné pour l'authentification.

16. Appareil pour l'authentification et la localisation d'un utilisateur mobile, programmé ou configuré pour la mise en oeuvre d'un procédé selon l'une quelconque des revendications précédentes.
